# DEMANDE DE BREVET EUROPEEN

(11) **EP 0 939 209 A2**
(43) Date de publication de la demande: **01.09.1999**
(21) Numéro de dépôt: 99420032.7
(22) Date de dépôt: 11.02.1999
(51) Int. Cl.: F01N 7/18, F16J 15/06

(54) **Joint métallique d'étanchéité pour ligne d'échappement de gaz de combustion de moteurs thermiques**

(30) Priorité: 12.02.1998 FR 9801979
(71) Demandeur: Federal Mogul Sealing Systems, 69800 Saint Priest (FR)
(72) Inventeur: Regincos Eric, 38780 Septeme (FR); Rogeon, Pascal, 38300 Ruy (FR)
(74) Mandataire: Maureau, Philippe

(57) **Abrégé**

Joint destiné à être monté serré entre deux surfaces ou brides (8) appartenant à deux tronçons (7) de la ligne d'échappement, et comportant une ouverture (4) destinée à être disposée en regard de chaque passage de gaz, entourée par une nervure d'étanchéité (6). Ce joint comporte au moins deux pattes (12) faisant saillie directement ou non à partir du bord (5) délimitant une ouverture (4), s'étendant sensiblement perpendiculairement au plan du joint et destinée à être engagée, dans des tubulures (7) de la ligne d'échappement adjacentes au joint, en contact avec la paroi de ces tubulures.

## Description

Un moteur thermique, par exemple un moteur équipant un véhicule automobile, produit des gaz d'échappement qu'il convient d'évacuer par une ligne d'échappement. Cette ligne d'échappement comprend différents éléments tubulaires, assemblés les uns aux autres, ainsi qu'un catalyseur, et un silencieux. Dans la mesure où le moteur comporte plusieurs cylindres, il convient de disposer d'un collecteur réunissant différents conduits en un ou deux conduits seulement de sortie. Ces différents éléments constituent la ligne d'échappement. Ces éléments doivent être assemblés avec étanchéité les uns aux autres, afin d'éviter le passage parasite de gaz de combustion entre eux.

Généralement, les différents éléments de la ligne d'échappement se terminent par des brides, assemblées les unes aux autres par boulonnage. L'étanchéité entre deux brides est réalisée par un joint métallique, obtenu à partir d'un métal en feuille, par découpe pour ménager au moins une ouverture pour le passage des gaz, et emboutissage d'une nervure d'étanchéité. Ces joints comportent des oreilles dépassant vers l'extérieur, comportant des ouvertures permettant le passage des goujons d'assemblage entre deux brides, ou deux surfaces appartenant à deux éléments.

Ce type de joint est réalisé en acier inoxydable à forte élasticité et possédant une tenue thermique élevée. Ce type d'acier est cher.

Le but de l'invention est de fournir un joint métallique de ce type, qui soit d'un prix de revient moins élevé que les joints actuellement connus, et qui permette un positionnement sur l'un ou l'autre de deux éléments à assembler d'une ligne d'échappement, avant assemblage de ces deux éléments.

A cet effet, le joint métallique d'étanchéité qu'elle concerne, destiné à être monté serré entre deux surfaces ou brides appartenant à deux tronçons de la ligne d'échappement, et comportant une ouverture destinée à être disposée en regard de chaque passage de gaz, entourée par une nervure d'étanchéité, est caractérisé en ce qu'il comporte au moins deux pattes faisant saillie directement ou non à partir du bord délimitant une ouverture, s'étendant sensiblement perpendiculairement au plan du joint et destinée à être engagée dans des tubulures de la ligne d'échappement adjacentes au joint, en contact avec la paroi de ces tubulures.

Lors du montage d'un joint, il convient de positionner celui-ci en engageant, dans l'une des tubulures, les pattes faisant saillie du joint, ces pattes prenant appui contre la paroi de la ou des tubulures, assurant ainsi un positionnement du joint et la retenue de celui-ci avant positionnement de l'élément adjacent de la ligne d'échappement, et assemblage des deux éléments considérés par boulonnage. Ce joint métallique est donc d'une mise en oeuvre très pratique. En outre, il est économique, dans la mesure où, ne comportant pas d'oreilles faisant saillie vers l'extérieur, comme dans le cas des joints traditionnels, il peut être réalisé dans une surface minimale de feuille métallique.

Avantageusement, chaque patte est obtenue par découpe de l'ouverture du joint et pliage de la patte à sensiblement 90°.

La réalisation ne pose pas de problème particulier, dans la mesure où les pattes sont obtenues au cours de l'opération de découpage, et ménagées dans les zones qui, habituellement, sont perdues, dans la mesure où elles correspondent à l'ouverture ou aux ouvertures du joint.

Suivant une autre caractéristique de l'invention, chaque patte comporte, à proximité de son extrémité libre, un pli transversal tourné vers l'extérieur, délimitant une zone d'extrémité inclinée en forme de chanfrein.

Le chanfrein facilite l'introduction des pattes dans la ou les ouvertures, tandis que la nervure leur confère une bonne élasticité assurant un excellent maintien dans la ou les tubulures.

Suivant une forme d'exécution de ce joint, dans le cas d'un joint pour une tubulure unique, celui-ci comporte trois pattes décalées de 120° les unes par rapport aux autres et faisant saillie directement du bord délimitant l'ouverture.

Suivant une autre forme d'exécution du joint selon l'invention, dans le cas d'un joint destiné à réaliser l'étanchéité de plusieurs tubulures appartenant par exemple à un collecteur d'échappement, et présentant une ouverture pour chaque tubulure, celui-ci comporte au moins une patte faisant saillie du bord de chaque ouverture.

Suivant une autre forme d'exécution du joint selon l'invention, dans le cas où l'une des tubulures adjacentes au joint comporte une cloison intermédiaire, le joint comporte une bande intermédiaire correspondante de laquelle font saillie des pattes destinées à venir prendre appui de part et d'autre de la cloison intermédiaire.

De toute façon, l'invention sera bien comprise, à l'aide de la description qui suit, en référence au dessin schématique annexé représentant, à titre d'exemples non limitatifs, plusieurs formes d'exécution de ce joint métallique :
Figure 1 est une vue en perspective éclatée d'un premier joint métallique et d'une bride d'un élément d'une ligne d'échappement contre laquelle il est destiné à être monté ;
Figure 2 est une vue de dessus du joint de figure 1 ;
Figure 3 est une vue en coupe transversale de ce joint en position montée entre deux éléments d'une ligne d'échappement ;
Figure 4 est une vue en perspective éclatée d'un second joint et de la bride d'un élément d'une ligne d'échappement ;
Figure 5 est une vue en coupe transversale de ce second joint en position montée entre deux éléments d'une ligne d'échappement ;
Figure 6 est une vue en perspective éclatée d'un joint à plusieurs ouvertures et de l'extrémité d'un collecteur d'échappement.

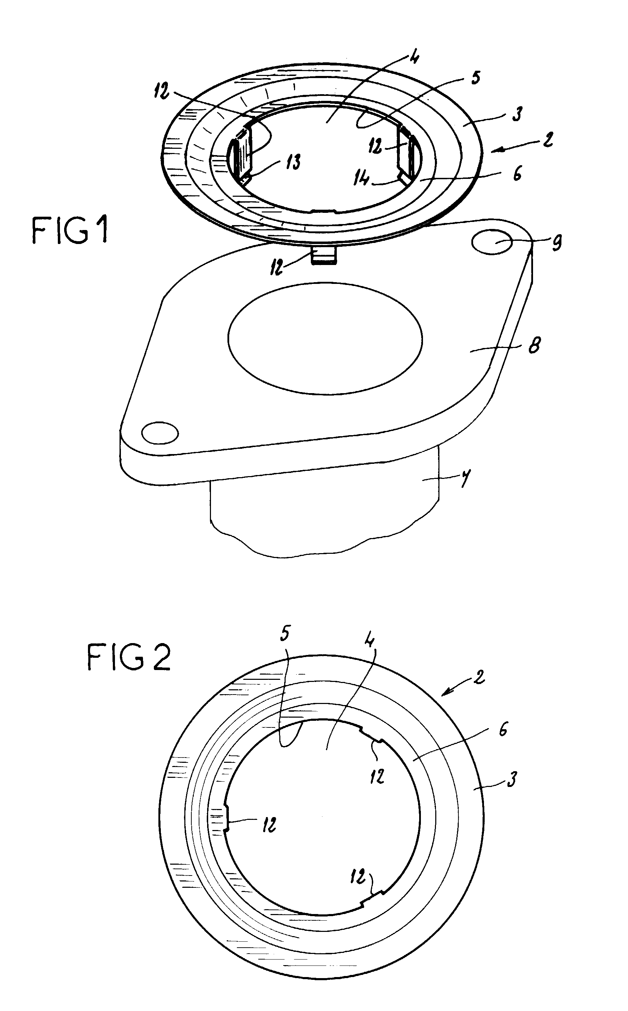

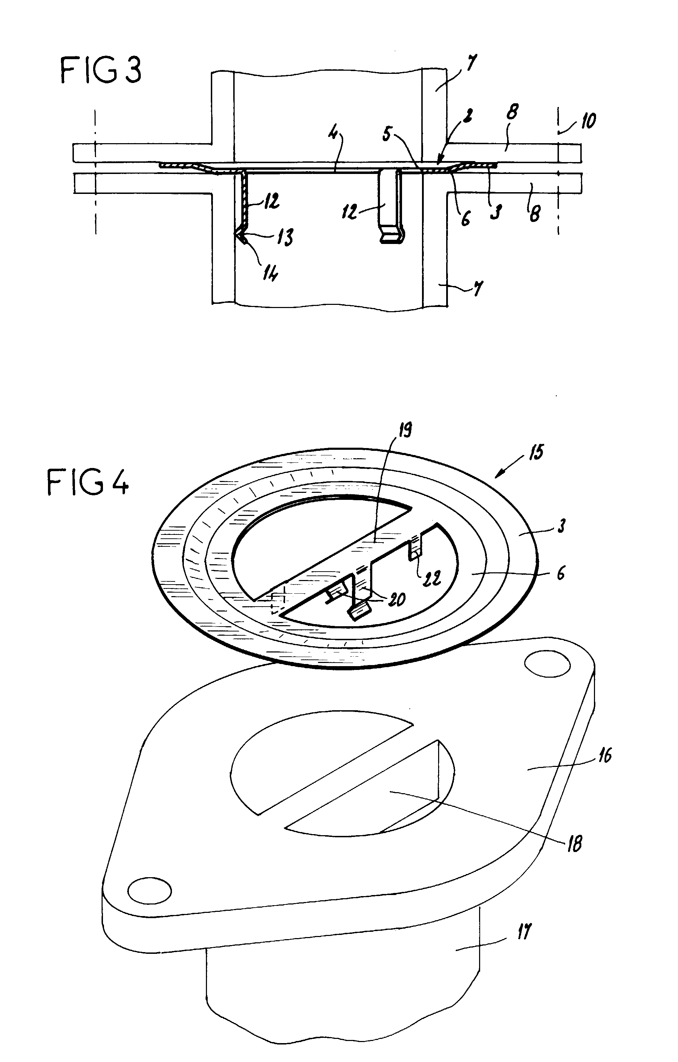

Le joint 2 représenté aux figures 1 à 3 comprend un corps annulaire plat 3 dans la partie centrale duquel est ménagée une ouverture 4 délimitée par un bord 5. A proximité du bord 5, est ménagée une nervure d'étanchéité 6. Ce joint est destiné à réaliser l'étanchéité entre deux tubulures 7 d'une ligne d'échappement, chaque tubulure se terminant par une bride 8, dans laquelle sont ménagées deux ouvertures 9 destinées à permettre l'assemblage des deux éléments par des boulons 10 schématisés en trait mixte à la figure 3.

Le joint 2 comporte trois pattes 12 faisant saillie à partir du bord 5, sensiblement perpendiculairement au plan du joint. Chaque patte 12 comporte, à proximité de son extrémité libre, un pli transversal 13 tourné vers l'extérieur, délimitant une zone d'extrémité 14 inclinée en forme de chanfrein.

En pratique, partant de la position représentée à la figure 1, le joint est positionné par rapport à un premier élément avec engagement des pattes 12 dans la tubulure 7. Le joint 12 se trouve centré et retenu, par appui des pattes 12 contre la tubulure 7. Le second élément de la ligne d'échappement peut être positionné puis serré sur le premier par les boulons 10.

La figure 4 représente un joint 15, qui constitue une variante du joint précédent, dans lequel les mêmes éléments sont désignés par les mêmes références que précédemment. Ce joint est destiné à réaliser l'étanchéité vis-à-vis de la bride 16 d'une tubulure 17 présentant une cloison centrale 18. Le joint 3 présente une bande centrale diamétrale 19, correspondant à la cloison 18, des pattes 20, 22 faisant saillie à partir de cette bande centrale 19. Les pattes 20 disposées de part et d'autre de la bande centrale 19 sont similaires aux pattes 12 du joint décrit en référence aux figures 1 à 3. Au contraire, les pattes 22 sont des pattes droites, qui sont de simples pattes de positionnement.

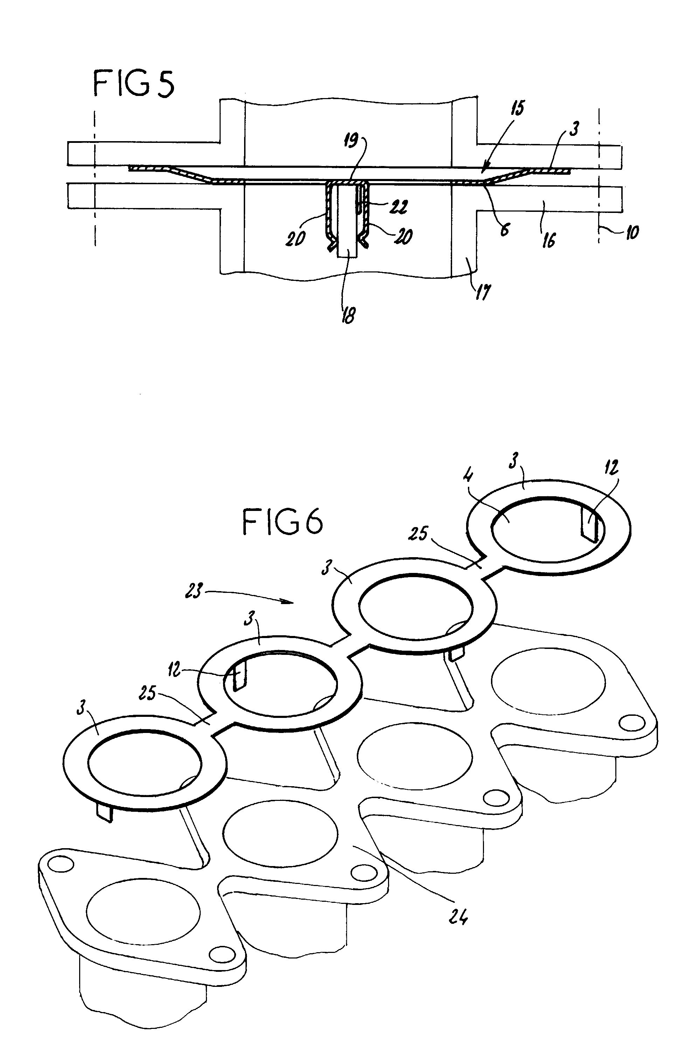

La figure 6 représente un joint 23 destiné à équiper un collecteur d'échappement, dont la bride multiple 24 est représentée au dessin. Ce joint comporte plusieurs corps annulaires 3 identiques à celui décrit en référence aux figures 1 à 3, reliés les uns aux autres par des pontages 25. Dans ce cas, au moins une patte 12 fait saillie du bord de chaque corps 3 délimitant une ouverture 4 pour le passage de gaz de combustion.

Comme il ressort de ce qui précède, l'invention apporte une grande amélioration à la technique existante, en fournissant un joint métallique de structure simple, d'un prix de revient réduit et possédant des moyens assurant son positionnement et sa retenue sur l'un des éléments d'une ligne d'échappement, avant assemblage de cet élément avec un élément voisin.

Comme il va de soi, l'invention ne se limite pas aux seules formes d'exécution de ce joint, décrites ci-dessus à titre d'exemples, elle en embrasse au contraire toutes les variantes. C'est ainsi notamment que le nombre de pattes de positionnement pourrait être différent sans que l'on sorte pour autant du cadre de l'invention.

## Revendications

1. Joint métallique d'étanchéité pour ligne d'échappement de gaz de combustion de moteurs thermiques destiné à être monté serré entre deux surfaces ou brides (8, 16, 24) appartenant à deux tronçons (7, 17) de la ligne d'échappement, et comportant une ouverture (4) destinée à être disposée en regard de chaque passage de gaz, entourée par une nervure d'étanchéité (6), caractérisé en ce qu'il comporte au moins deux pattes (12, 20, 22) faisant saillie directement ou non à partir du bord (5) délimitant une ouverture (4), s'étendant sensiblement perpendiculairement au plan du joint et destinée à être engagée dans des tubulures (7, 17) de la ligne d'échappement adjacentes au joint, en contact avec la paroi de ces tubulures.

2. Joint métallique selon la revendication 1, caractérisé en ce que chaque patte (12, 20, 22) est obtenue par découpe de l'ouverture (4) du joint et pliage de la patte à sensiblement 90°.

3. Joint métallique selon l'une quelconque des revendications 1 et 2, caractérisé en ce que chaque patte (12, 20) comporte, à proximité de son extrémité libre, un pli transversal (13) tourné vers l'extérieur, délimitant une zone d'extrémité inclinée (14) en forme de chanfrein.

4. Joint métallique selon l'une quelconque des revendications 1 à 3, caractérisé en ce que, dans le cas d'un joint (2) pour une tubulure unique, celui-ci comporte trois pattes (12) décalées de 120° les unes par rapport aux autres et faisant saillie directement du bord (5) délimitant l'ouverture (4).

5. Joint métallique selon l'une quelconque des revendications 1 à 3, caractérisé en ce que que, dans le cas d'un joint (23) destiné à réaliser l'étanchéité de plusieurs tubulures appartenant par exemple à un collecteur d'échappement (24), et présentant une ouverture pour chaque tubulure, celui-ci comporte au moins une patte (12) faisant saillie du bord de chaque ouverture (4).

6. Joint métallique selon l'une quelconque des revendications 1 à 3, caractérisé en ce que, dans le cas où l'une des tubulures (17) adjacentes au joint comporte une cloison intermédiaire (18), le joint comporte une bande intermédiaire (19) correspondante de laquelle font saillie des pattes (20, 22) destinées à venir prendre appui de part et d'autre de la cloison intermédiaire.
